# EUROPEAN PATENT APPLICATION

(11) **EP 4 852 267 A1**
(43) Date of publication of application: **09.12.2026**
(21) Application number: 25180800.2
(22) Date of filing: 04.06.2025
(51) Int. Cl.: H02J 3/38, H02J 3/36

(54) **METHOD FOR DETECTING A GRID LOSS SIGNAL FOR PROTECTING AN MMC CONNECTED TO A UTILITY GRID, CONTROL DEVICE, COMPUTER PROGRAM, AND COMPUTER-READABLE STORAGE MEDIUM**

(71) Applicant: Hitachi Energy Ltd, 8050 Zürich (CH)
(72) Inventor: Schlegel, Christian, 8142 Uitikon (CH); R, Sreejith, 678611 Palakkad, Kerala (IN); Burch, Philipp, 6060 Sarnen (CH)
(74) Representative: Epping - Hermann - Fischer

(57) **Abstract**

A method for detecting a grid loss signal is specified for protecting a modular multilevel converter connected to a utility grid, comprising: providing grid measurement information characteristic of a grid current (I_{G}) and a grid voltage (V_{G}), providing converter measurement information characteristic of a capacitor voltage (V_{DC}) of the modular multilevel converter, determining an active power current component (i_{d}) of the grid current (I_{G}), determining an estimated angular frequency (ω_{PLL}) of the grid depending on the grid voltage (V_{G}), determining a negative sequence voltage component (V_{dqNS}) depending on the grid voltage (V_{G}), and determining the grid loss signal depending on four conditions.

Furthermore, a control device (1), a computer program, and a computer-readable storage medium are specified.

## Description

The present disclosure relates to a method for detecting a grid loss signal for protecting a modular multilevel converter connected to a utility grid, a control device, a computer program, and a computer-readable storage medium.

Typically, there are no control techniques for detection of a grid loss by a direct MMC based static frequency converter while connected to the grid.

Embodiments of the disclosure relate to a method improving the protection of a modular multilevel converter. A further embodiment relates to a control device configured to perform such a method, as well as to a computer program and a computer-readable storage medium.

This is achieved by the subject-matter of the independent claims. Further embodiments are evident from the dependent claims and the following description.

A method for detecting a grid loss signal for protecting a modular multilevel converter connected to a utility grid is described.

For example, the utility grid is part of a transmission network for electrical power, which in particular comprises three phases. For example, the utility grid is operated with an operating frequency of 50 Hz or 60 Hz. The utility grid is, for example, connected to the modular multilevel converter.

The modular multilevel converter comprises, for example, a plurality of individual power electronic modules arranged in a stack. Each power electronic module comprises, exemplarily, one or a plurality of semiconductor devices such as semiconductor switches and capacitors, and/or other passive electrical components. The power semiconductor switches are formed, for example, as insulated gate bipolar transistors, IGBTs and/or integrated gate-commutated thyristors, IGCTs.

For example, the modular multilevel converter is a direct AC-to-AC modular multilevel railway static frequency converter. The direct AC-to-AC modular multilevel railway static frequency converter is in particular configured to convert the three-phase components from the utility grid to single-phase components facing a load, e.g. being part of a railway system.

According to an embodiment of the method, grid measurement information is provided that is characteristic of a grid current and a grid voltage. The grid measurement information is provided, for example, to a control device, particularly from a sensor device of the utility grid. The sensor device of the utility grid is configured to acquire information representing the grid measurement information. In particular, the information representing the measurement information is measured on the grid side.

For example, the grid current is characteristic of an actual, real-time current, particularly a three-phase current, at the utility grid, flowing from the utility grid into an input terminal of the modular multilevel converter. This means, in particular, that the information representing the grid current is measured on the grid side.

For example, the grid voltage is characteristic of an actual, real-time voltage, particularly a three-phase voltage, at the utility grid, applied to the input terminal of the modular multilevel converter. This means, in particular, that the information representing the grid voltage is measured on the grid side.

According to an embodiment of the method, converter measurement information is provided that is characteristic of a capacitor voltage of the modular multilevel converter. The converter measurement information is provided, for example, to a control device, particularly from a sensor device of the modular multilevel converter. The sensor device of the modular multilevel converter is configured to acquire information representing the converter measurement information. In particular, the information representing the converter measurement information is measured on the modular multilevel converter side.

For example, the capacitor voltage is characteristic of an actual, real-time capacitor voltage between the input terminal and an output terminal of the modular multilevel converter. This means, in particular, that the information representing the capacitor voltage is measured on the modular multilevel converter side. Exemplarily, all the capacitors of all the power electronic modules of the modular multilevel converter are considered for the capacitor voltage. Exemplarily, the capacitor voltage is a direct current, DC, voltage.

According to an embodiment of the method, an active power current component of the grid current is determined. Optionally, a reactive power current component of the grid current is determined.

The active power current component, and optionally the reactive power current component, is exemplarily determined by the control device. The determination comprises a mathematical transformation of the grid measurement information, particularly the grid current, into a rotating reference frame. The rotating reference frame is particularly a direct-quadrature, dq, frame having a component i_{d} characteristic of the active power current component, and having a component i_{q} characteristic of the reactive power current component.

According to an embodiment of the method, an estimated angular frequency of the grid is determined depending on the grid voltage. The estimated angular frequency is exemplarily determined by the control device.

The determination comprises a mathematical transformation of the grid measurement information, particularly the grid voltage, into a rotating grid voltage vector, e.g. by using a Clarke transformation. The rotating grid voltage vector is, for example, a two-dimensional vector. Subsequently, a feedback loop is used, which is exemplarily configured to estimate a phase angle of the rotating grid voltage vector. The feedback loop is, in particular, a phase-locked loop, PLL. The feedback loop is configured to continuously adjust the estimated angular frequency of the grid, such that an estimated phase angle comprised by the estimated angular frequency aligns with the phase angle comprised by the rotating grid voltage vector.

According to an embodiment of the method, a negative sequence voltage component is determined depending on the grid voltage. The negative sequence voltage component is exemplarily determined by the control device. Exemplarily, the negative sequence voltage component is zero in a balanced system comprising the utility grid and the modular multilevel converter and becomes non-zero when the system is unbalanced, being determined based on the grid voltage.

For determining the negative sequence voltage component, a negative sequence phasor is, for example, determined for the grid voltage. Subsequently, negative sequence voltages are exemplarily determined based on the negative sequence phasor. Subsequently, the negative sequence voltages are transformed by a mathematical transformation into a rotating reference frame. The rotating reference frame is particularly a dq frame for determining the negative sequence voltage component V_{dqNS}, which comprises a negative sequence voltage component element V_{dNS} and a negative sequence voltage component element V_{qNS}.

According to an embodiment of the method, the grid loss signal is determined depending on a first condition, a second condition, a third condition and a fourth condition. The first condition is dependent on the active power current component. The second condition is dependent on the capacitor voltage. The third condition is dependent on the estimated angular frequency. The fourth condition is dependent on the negative sequence voltage component.

In particular, when the first condition, the second condition, the third condition and the fourth condition are met, the grid loss signal is characteristic of the grid loss.

For example, the active power current component is characteristic of a power flow from the utility grid to the modular multilevel converter. For example, the first condition indicates if the power flow is correct or not correct, being determined depending on the active power current component.

For example, the capacitor voltage is characteristic of a charging condition of the modular multilevel converter. For example, the second condition indicates if the modular multilevel converter, particularly the power electronic modules thereof, can be charged and/or discharged or not from the grid side, being determined depending on the capacitor voltage.

For example, large deviation from the estimated angular frequency is characteristic of a loss of grid on the grid side. For example, the third condition indicates if the utility grid can absorb or provide the active power at the output of the modular multilevel converter, being determined depending on deviation of the estimated angular frequency.

For example, the negative sequence voltage component is characteristic of a grid loss. For example, the fourth condition indicates if the grid loss is present or not, being determined depending on the negative sequence voltage component.

The method described herein is in particular a computer-implemented method.

Exemplarily, for a momentary interruption or a loss of grid, for e.g. up to 300 ms, the momentary interruption or the loss of grid can occur due to several reasons such as opening of a circuit breaker from upstream, or somewhere near the grid where typical feedback data is unavailable, and/or remote location signal delay. When the modular multilevel converter is in operation, a grid loss can cause energy imbalance resulting in sudden overvoltage of the power electronic modules, which is harmful to the semiconductor devices, or undervoltage, which will cause a loss of converter operation. Advantageously, with the method described herein above, a grid loss can be detected quickly for advantageously protecting the modular multilevel converter. In particular, the grid loss signal is characteristic of a grid loss or not.

By determining the grid loss signal, any detrimental impact can be advantageously prevented on the modular multilevel converter, and other equipment connected to a respective supply line. As soon as the grid is restored, pulses can be released, and normal operation of power transfer from the utility grid to the load, e.g. being a railway grid, can be continued.

With the method described herein, grid loss can be advantageously selectively detected and differentiated from grid fault conditions. In particular, with the provided method, a fast, reliable and robust grid loss detection technique based on multiple criteria - i.e. conditions - is advantageously achieved. In particular, an instantaneous grid loss detection is achieved, which differentiates short circuits, and protects the modular multilevel converter by blocking the pulses until the grid is restored.

With the method described herein, protection of the modular multilevel converter is ensured during an unintentional loss of grid on the side of the modular multilevel converter and, hence, the reliability of the modular multilevel converter is increased without any additional sensors or equipment.

According to a further embodiment of the method, a switching of semiconductor devices of the modular multilevel converter is suspended depending on the grid loss signal. If the grid loss signal is characteristic of a grid loss, the switching of the semiconductor devices of the modular multilevel converter is suspended. If the grid loss signal is characteristic of no grid loss, the switching of the semiconductor devices of the modular multilevel converter is operated normally.

Advantageously, due to the suspending of the switching, there is no voltage output of the modular multilevel converter, such that any current flow between the modular multilevel converter and a point of common coupling, PCC, is prevented. The PCC is, for example, coupled to the load being exemplarily the railway grid.

According to a further embodiment of the method, the switching of semiconductor devices of the modular multilevel converter is resumed depending on the grid measurement information, particularly characteristic of the grid loss signal. If the grid loss signal is characteristic of no grid loss, particularly after a grid loss, the switching of the semiconductor devices of the modular multilevel converter is resumed to be operated normally.

According to a further embodiment of the method, the utility grid is a three-phase grid.

According to a further embodiment of the method, the utility grid is configured to provide a three-phase grid power input to the modular multilevel converter, and/or the modular multilevel converter is configured to provide a three-phase grid power output to the grid.

According to a further embodiment of the method, the modular multilevel converter is configured to convert the three-phase grid power input to a power output, and/or the modular multilevel converter is configured to convert a power input to the three-phase grid power output.

According to a further embodiment of the method, a circuit breaker is arranged between the utility grid and the modular multilevel converter. Exemplarily, the utility grid is connected to the modular multilevel converter by a circuit breaker. The circuit breaker is configured to electrically connect the utility grid to the modular multilevel converter in a closed state, and the circuit breaker is configured to electrically disconnect the utility grid from the modular multilevel converter in an open state.

According to a further embodiment of the method, the grid loss signal is additionally determined depending on a fifth condition being dependent on the state of the circuit breaker. For example, the state of the circuit breaker indicates whether the circuit breaker is in the open state or in the closed state. If the circuit breaker is in the closed state, the fifth condition is met, and the grid loss signal is characteristic of the grid loss. If the circuit breaker is in the open state, the grid loss signal is irrelevant for the converter's operation.

Advantageously, the grid loss signal is characteristic of the grid loss when the modular multilevel converter is still connected to the utility grid via the circuit breaker.

According to a further embodiment of the method, the grid loss signal is additionally determined depending on a sixth condition being dependent on an absolute value of the grid current. If the absolute value is zero, the sixth condition is met, and the grid loss signal is characteristic of the grid loss. If the absolute value is different from zero, the sixth condition is not met, and the grid loss signal is characteristic of no grid loss.

Advantageously, the sixth condition is characteristic of whether or not a current is flowing between the utility grid and the modular multilevel converter.

Exemplarily, when the first condition, the second condition, the third condition and the fourth condition, and optionally the fifth condition and/or the sixth condition, are met, the grid loss signal is characteristic of the grid loss.

According to a further embodiment of the method, the first condition is met when the active power current component is zero or a deviation of the active power current component from a reference active power current component is larger than a first threshold. The reference active power current is, for example, a predetermined value and corresponds to an active power current of a system with a utility grid which functions normally, i.e. where no grid loss is present. The first threshold corresponds to a difference which is characteristic of a value above which the system with the utility grid does not function normally, i.e. where the grid loss is present.

According to a further embodiment of the method, the second condition is met when a deviation of the capacitor voltage from a reference capacitor voltage is larger than a second threshold. The reference capacitor voltage is, for example, a predetermined value and corresponds to a capacitor voltage of a modular multilevel converter, which can be charged and/or discharged, indicating that no grid loss is present. The second threshold corresponds to a difference which is characteristic of a value above which the modular multilevel converter is not charged and/or not discharged, i.e. indicating that the grid loss is present.

According to a further embodiment of the method, the third condition is met when a deviation of the estimated angular frequency from a reference estimated angular frequency is larger than a third threshold. The reference estimated angular frequency is, for example, a predetermined value and corresponds to an estimated angular frequency of a system with a utility grid which functions normally, i.e. where no grid loss is present. The third threshold corresponds to a difference which is characteristic of a value above which the system with the utility grid does not function normally, i.e. where the grid loss is present.

According to a further embodiment of the method, the fourth condition is met when a magnitude of the negative sequence voltage component is larger than a fourth threshold. The fourth threshold corresponds to a value above which the system with the utility grid does not function normally, i.e. where the grid loss is present.

A further embodiment relates to a control device, being configured to perform the method as described herein before. Therefore, the features as described in connection with the method are also applicable to the control device and vice versa.

A further embodiment relates to a computer program comprising instructions which, when the computer program is executed by a computing device, cause the computer program to execute the method described herein above. In particular, the computer program can be implemented as a hardware control, software control and/or firmware control or combinations thereof.

A further embodiment relates to a computer-readable storage medium on which the computer program described herein above is stored.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.
Figure 1 schematically shows a flow diagram of the method according to an exemplary embodiment.
Figure 2 schematically shows a logic of the method according to an exemplary embodiment.
Figures 3, 4, 5 and 6 show exemplary diagrams of data used in the method according to an exemplary embodiment.

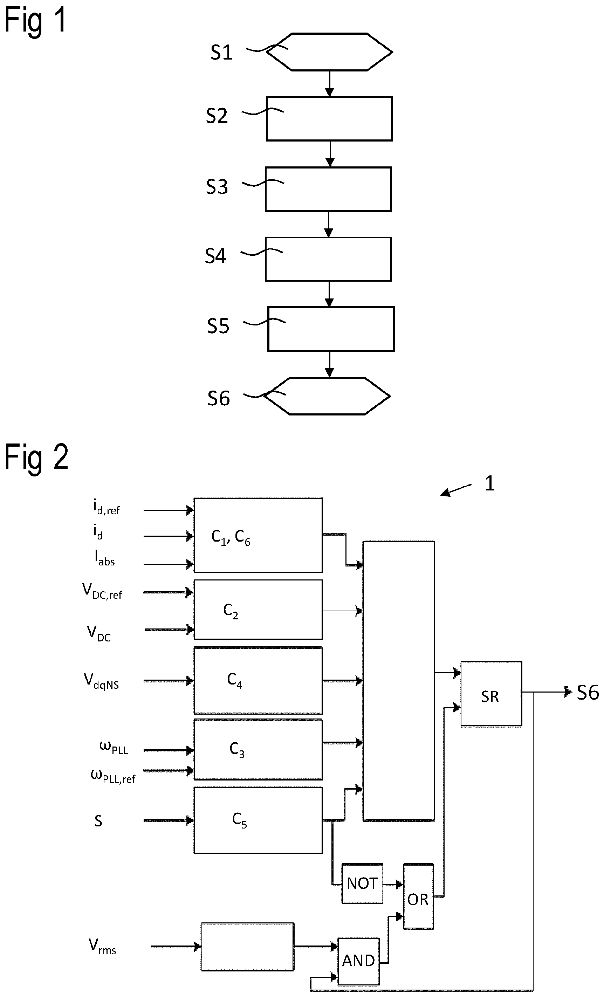

In method stage S1 of Figure 1, a grid measurement information is provided that is characteristic of a grid current I_{G} and a grid voltage V_{G}.

In method stage S2, converter measurement information is provided that is characteristic of a capacitor voltage V_{DC} of a modular multilevel converter. The measurement information provided in method stages S1 and S2 is provided continuously, particularly simultaneously, for example to a control device 1, as shown in Figure 2.

An active power current component i_{d} of the grid current I_{G} is determined in method stage S3. Further, an estimated angular frequency ω_{PLL} of the grid is determined depending on the grid voltage V_{G} in method stage S4, and a negative sequence voltage component V_{dqNS} is determined depending on the grid voltage V_{G} in method stage S5. Method stages S3, S4 and S5 are performed particularly continuously, particularly simultaneously, for example by the control device 1.

In method stage S6, the grid loss signal is determined depending on a first condition C1 being dependent on the active power current component i_{d}, a second condition C2 being dependent on the capacitor voltage V_{DC}, a third condition C3 being dependent on the estimated angular frequency ω_{PLL}, and a fourth condition C4 being dependent on the negative sequence voltage component V_{dqNS}.

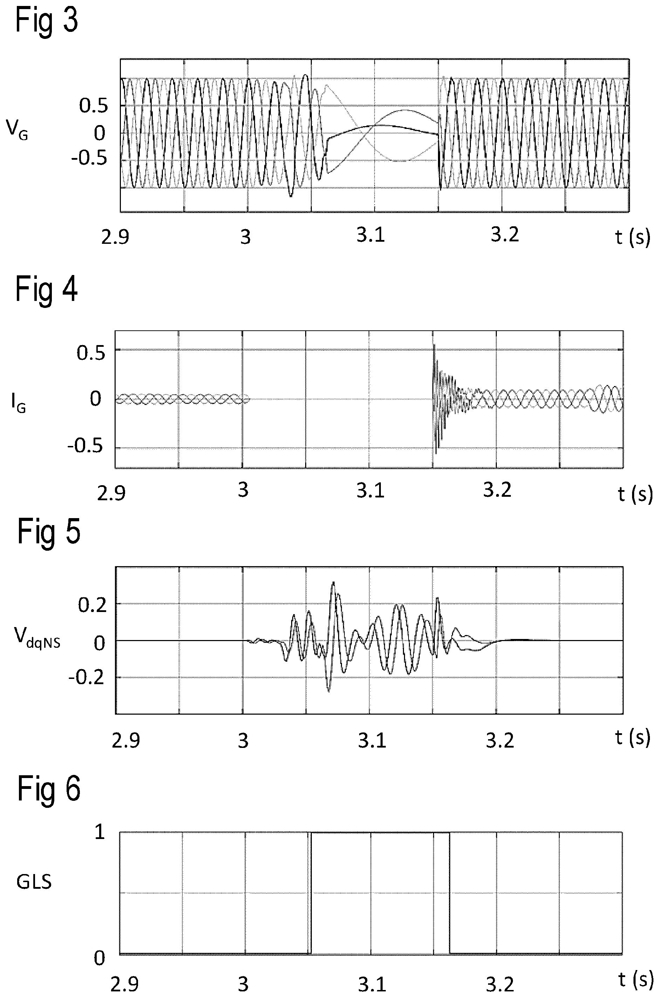

If all of the first condition C1, the second condition C2, the third condition C3 and the fourth condition C4 are met, the determined grid loss signal is characteristic of a grid loss, as shown for example in connection with Figures 3 to 6.

Optionally, the grid loss signal is additionally determined depending on a fifth condition C5 being dependent on a state of the circuit breaker S. Further optionally, the grid loss signal is additionally determined dependent on a sixth condition C6 being dependent on an absolute value of the grid current I_{abs}.

In particular, with the method described herein, a supervisory control technique based on the available measurement data of the utility grid and internal measurement data of the modular multilevel converter is advantageously used to immediately detect the grid loss and block pulses to the modular multilevel converter, i.e. a switching of semiconductor devices of the modular multilevel converter is suspended depending on the grid loss signal, particularly when the respective conditions are met and the grid loss signal is characteristic of the grid loss.

A logic of the method according to Figure 2 is configured to accurately detect the grid loss whenever the following conditions are simultaneously satisfied:
The sixth condition C6 is satisfied when there is no current flowing between the utility grid and the modular multilevel converter so that an absolute value of the grid current I_{abs} is zero.

The first condition C1 is satisfied when either the active power current component i_{d} is zero, or when a deviation of the active power current component i_{d} from a reference active power current component i_{d,ref} is larger than a first threshold.

The fifth condition C5 is satisfied when the modular multilevel converter is still connected to the utility grid via a circuit breaker, i.e. when a state of the circuit breaker S is a closed state.

The second condition C2 is satisfied when a deviation of the capacitor voltage V_{DC} from a reference capacitor voltage V_{DC,ref} is larger than a second threshold, particularly indicating that the power electronic modules cannot be charged anymore from the grid side.

The third condition C3 is satisfied when a deviation of the estimated angular frequency ω_{PLL} from a reference estimated angular frequency ω_{PLL,ref} is larger than a third threshold, particularly indicating a grid loss to differentiate the same from a short circuit on the gird side.

The fourth condition C4 is satisfied when a magnitude of the negative sequence voltage component V_{dqNS} is larger than a fourth threshold, as in particular the phases of the utility grid do not remain equal once the grid is lost.

Additionally, the root mean square grid voltage Vᵣₘₛ is considered as an input. The root mean square grid voltage Vᵣₘₛ is, for example, the same for all the phases if the system comprising the utility grid and the modular multilevel converter is balanced.

Advantageously, along with all the conditions described herein above, the negative sequence voltage component V_{dqNS} of the dq-frame, which might be beyond the fourth threshold value when the grid loss is present, ensures that the method works efficiently across different power levels, particularly under no-load conditions.

In Figures 3, 4, 5 and 6 an effectiveness of the method described in connection with Figures 1 and 2 is described.

According to Figure 3, a grid voltage V_{G} of the utility grid, which is a three-phase grid, is lost or disconnected from 3s for 150 ms and subsequently restored. In particular, in Figure 3, the y-axis shows the grid voltage V_{G} in arbitrary units and the x-axis shows the time t in sec. The x-axis is the same for all of Figures 3, 4, 5 and 6. The three curves in Figures 3 and 4 represent the three different phases. In Figure 4, the y-axis shows the grid current I_{G} in arbitrary units.

In Figure 5, the y-axis shows the negative sequence voltage component V_{dqNS} in arbitrary units. The two curves in Figure 5 represent a negative sequence voltage component element V_{dNS} and a negative sequence voltage component element V_{qNS} of the negative sequence voltage component V_{dqNS}.

For short-term grid interruptions, the grid voltage V_{G} slowly reacts and becomes unbalanced, resulting in non-zero co-sinusoidal values for the negative sequence voltage component V_{dqNS} as shown in Figure 5. This key feature of oscillatory V_{dqNS} is utilized for effectively detecting grid loss even during no load condition and for a three-phase system. A combination of these criteria, i.e. the conditions, coupled with a frequency deviation helps to selectively and reliably distinguish grid loss from the three-phase grid short circuits.

Finally, the grid loss signal shown in Figure 6 is used as a protection function and is directed towards suspending a switching of semiconductor devices of the modular multilevel converter. In particular, in Figure 6, the y-axis shows the grid loss signal in arbitrary units, where the value 1 is characteristic of the grid loss.

In Figure 6, the grid loss signal is a result of the logic shown in Figure 2, e.g. corresponding to the method stage S6 of Figure 1. The grid loss detection is advantageously fast and reliable.

Furthermore, the method provides the possibility to resume the switching immediately as soon as the grid is back. This is achieved by means of simple grid voltage measurements, particularly the root mean square grid voltage Vᵣₘₛ. Once it is observed that magnitude values of the root mean square grid voltage Vᵣₘₛ of phase-to-phase and phase-to-neutral grid voltage V_{G} is back to a minimum threshold value, the grid loss detection is reset by an SR flip-flop, as indicated in Figure 2, and pulses are released with normal operation restored.

The embodiments and exemplary embodiments described herein above can be combined accordingly.

### Reference Signs

- 1: control device

- I_{G}: grid current
- V_{G}: grid voltage
- V_{DC}: capacitor voltage
- i_{d}: active power current component
- i_{q}: reactive power current component
- ω_{PLL}: estimated angular frequency
- ω_{PLL,ref}: reference estimated angular frequency
- V_{dqNS}: negative sequence voltage component
- i_{d,ref}: reference active power current component
- V_{DC,ref}: reference capacitor voltage
- ω_{PLL,ref}: reference estimated angular frequency
- I_{abs}: absolute value of the grid current
- S: state of the circuit breaker
- GLS: grid loss signal
- Vᵣₘₛ: root mean square grid voltage
- SR: SR flip flop
- C1..C6: conditions
- S1..S6: method stages

## Claims

1. Method for detecting a grid loss signal for protecting a modular multilevel converter connected to a utility grid, comprising:
- providing grid measurement information characteristic of a grid current (I_{G}) and a grid voltage (V_{G}),
- providing converter measurement information characteristic of a capacitor voltage (V_{DC}) of the modular multilevel converter,
- determining an active power current component (i_{d}) of the grid current (I_{G}),
- determining an estimated angular frequency (ω_{PLL}) of the grid depending on the grid voltage (V_{G}),
- determining a negative sequence voltage component (V_{dqNS}) depending on the grid voltage (V_{G}), and
- determining the grid loss signal depending on
- a first condition (C1) being dependent on the active power current component (i_{d}),
- a second condition (C2) being dependent on the capacitor voltage (V_{DC}) ,
- a third condition (C3) being dependent on the estimated angular frequency (ω_{PLL}), and
- a fourth condition (C4) being dependent on the negative sequence voltage component (V_{dqNS}).

2. Method according to claim 1, wherein
- a switching of semiconductor devices of the modular multilevel converter is suspended depending on the grid loss signal.

3. Method according to claim 2, wherein
- the switching is resumed depending on the grid measurement information.

4. Method according to one of claims 1 to 3, wherein
- the utility grid is a three-phase grid, and
- the utility grid is configured to provide a three-phase grid power input to the modular multilevel converter, and/or the modular multilevel converter is configured to provide a three-phase grid power output to the grid.

5. Method according to claim 4, wherein
- the modular multilevel converter is configured to convert the three-phase grid power input to a power output, and/or the modular multilevel converter is configured to convert a power input to the three-phase grid power output.

6. Method according to one of claims 1 to 5, wherein
- a circuit breaker is arranged between the utility grid and the modular multilevel converter.

7. Method according to claim 6, wherein
- the grid loss signal is additionally determined depending on a fifth condition (C5) being dependent on a state of the circuit breaker.

8. Method according to one of claims 1 to 7, wherein
- the grid loss signal is additionally determined depending on a sixth condition (C6) being dependent on an absolute value of the grid current (I_{G}).

9. Method according to one of claims 1 to 8, wherein
- the first condition (C1) is met when the active power current component (i_{d}) is zero or a deviation of the active power current component (i_{d}) from a reference active power current component (i_{d,ref}) is larger than a first threshold.

10. Method according to one of claims 1 to 9, wherein
- the second condition (C2) is met when a deviation of the capacitor voltage (V_{DC}) from a reference capacitor voltage (V_{DC,ref}) is larger than a second threshold.

11. Method according to one of claims 1 to 10, wherein
- the third condition (C3) is met when a deviation of the estimated angular frequency (ω_{PLL}) from a reference estimated angular frequency (ω_{PLL,ref}) is larger than a third threshold.

12. Method according to one of claims 1 to 11, wherein
- the fourth condition (C4) is met when a magnitude of the negative sequence voltage component (V_{dqNS}) is larger than a fourth threshold.

13. Control device (1) configured to perform the method according to one of claims 1 to 12.

14. Computer program comprising instructions which, when the computer program is executed by a computing device, cause the computer program to execute the method according to one of claims 1 to 12.

15. Computer-readable storage medium, on which the computer program according to claim 14 is stored.
